# EUROPEAN PATENT APPLICATION

(11) **EP 4 303 260 A1**
(43) Date of publication of application: **10.01.2024**
(21) Application number: 22763181.9
(22) Date of filing: 28.02.2022
(51) Int. Cl.: C08L 5/00, C09J 201/00, C09J 7/20, C09J 7/38

(54) **FILM AND ADHESIVE TAPE**

(30) Priority: 01.03.2021 JP 2021031890; 14.06.2021 JP 2021098636
(71) Applicant: Nitto Denko Corporation, Ibaraki-shi Osaka 567-8680 (JP)
(72) Inventor: OGINO, Yoshiko, Ibaraki-shi, Osaka 567-8680 (JP); KUMADA, Tatsuya, Ibaraki-shi, Osaka 567-8680 (JP); HARA, Yusuke, Ibaraki-shi, Osaka 567-8680 (JP); NAITO, Tomonari, Ibaraki-shi, Osaka 567-8680 (JP)
(74) Representative: Müller-Boré & Partner Patentanwälte PartG mbB
(86) International application number: PCT/JP2022/008249
(87) International publication number: WO 2022/186125

(57) **Abstract**

A film 1 contains a β-1,3-glucan derivative obtained by introducing an acyl group into a β-1,3-glucan and at least one resin selected from the group consisting of a rosin-based resin, a terpene-based resin, and a petroleum-based resin. The acyl group is represented by RCO-, and the R is a hydrocarbon group having 1 or more and 5 or less carbon atoms. Parts by weight of the resin with respect to 100 parts by weight of the β-1,3-glucan derivative are 90 parts by weight or less. A pressure-sensitive adhesive tape 3 includes the film 1 and a pressure-sensitive adhesive layer 4.

## Description

### TECHNICAL FIELD

The present invention relates to a film and a pressure-sensitive adhesive tape.

### BACKGROUND ART

A film containing a β-1,3-glucan is known (ref: for example, Patent Document 1 below).

### Citation List

### Patent Document

Patent Document 1: Japanese Unexamined Patent Publication No. 2004-331837

### SUMMARY OF THE INVENTION

### PROBLEM TO BE SOLVED BY THE INVENTION

Excellent mechanical strength is required for the above-described film in accordance with its application and purpose. However, in the film described in Patent Document 1, there is a disadvantage that the above-described requirement cannot be satisfied.

The present invention provides a film and a pressure-sensitive adhesive tape having excellent mechanical strength.

### MEANS FOR SOLVING THE PROBLEM

The present invention (1) includes a film containing a β-1,3-glucan derivative obtained by introducing an acyl group into a β-1,3-glucan, and at least one resin selected from the group consisting of a rosin-based resin, a terpene-based resin, and a petroleum-based resin, wherein the acyl group is represented by RCO-, and the R is a hydrocarbon group having 1 or more and 5 or less carbon atoms, and parts by weight of the resin with respect to 100 parts by weight of the β-1,3-glucan derivative are 90 parts by weight or less.

The present invention (2) includes a pressure-sensitive adhesive tape including the film described in (1), and a pressure-sensitive adhesive layer disposed on one surface in a thickness direction of the film.

### EFFECT OF THE INVENTION

The film and the pressure-sensitive adhesive tape of the present invention have excellent mechanical strength.

### BRIEF DESCRIPTION OF THE DRAWINGS

FIG. 1 shows a cross-sectional view of one embodiment of a film of the present invention.
FIG. 2 shows a cross-sectional view of a pressure-sensitive adhesive tape including the film shown in FIG. 1.
FIG. 3 shows a modified example of a pressure-sensitive adhesive tape.

### DESCRIPTION OF EMBODIMENTS

### <Film>

A film of the present invention contains a β-1,3-glucan derivative and a resin.

### <p-1,3-glucan Derivative>

The β-1,3-glucan derivative is a base polymer (or a main polymer) in the film. The β-1,3-glucan derivative is a partial acyl compound in which a part of a hydroxyl group in glucose contained in the β-1,3-glucan is acylated with an acyl group. In other words, the β-1,3-glucan derivative is an acyl compound in which the acyl group is introduced into the β-1,3-glucan.

The acyl group is represented by RCO-. Examples of R include hydrocarbon groups. Examples of the hydrocarbon group include aliphatic hydrocarbon groups and alicyclic hydrocarbon groups, and preferably, from the viewpoint of increasing mechanical strength, an aliphatic hydrocarbon group is used.

Examples of the aliphatic hydrocarbon group include saturated aliphatic hydrocarbon groups and unsaturated aliphatic hydrocarbon groups. As the aliphatic hydrocarbon group, preferably, from the viewpoint of increasing the mechanical strength, a saturated aliphatic hydrocarbon group is used.

Examples of the saturated aliphatic hydrocarbon group include alkyl groups. Examples of the alkyl group include straight-chain alkyl groups and branched alkyl groups. Examples of the straight-chain alkyl group include methyl, ethyl, propyl, butyl, sec-butyl, pentyl, and 3-pentyl. Examples of the branched alkyl group include iso-propyl, iso-butyl, tert-butyl, iso-pentyl, and neopentyl. As the alkyl group, preferably, a straight-chain alkyl group is used.

Number of carbon atoms of the hydrocarbon group (preferably, an alkyl group) is 1 or more, preferably 2 or more, more preferably 3 or more. When the number of carbon atoms of the hydrocarbon group is the above-described lower limit or more, it is possible to increase a tensile elastic modulus of the film.

The number of carbon atoms of the hydrocarbon group (preferably, an alkyl group) is 5 or less, preferably 4 or less, more preferably 3 or less. When the number of carbon atoms of the hydrocarbon group is above 5, the tensile elastic modulus and maximum tensile stress are reduced. Above all, when the number of carbon atoms of the hydrocarbon group is the above-described upper limit (preferably, 3) or less, it is possible to increase the maximum tensile stress.

Examples of the unsaturated aliphatic hydrocarbon group include alkenyl groups. Examples of the alkenyl group include vinyl groups and 2-propenyl groups.

Specific examples of the acyl group include acetyl (example R in RCO of CH₃), propionyl (example R in RCO of C₂H₅), butynyl (example R in RCO of C₃H₇), pentanoyl (example R in RCO of C₄H₉), and hexanoyl (example R in RCO of C₅H₁₁). Preferably, propionyl and butynyl are used.

A degree of substitution of the acyl group in the β-1,3-glucan derivative is not limited. The degree of substitution of the acyl group may be referred to as DS. The degree of substitution of the acyl group in the β-1,3-glucan derivative is an average of the number of substitution (introduction) among the 3 hydroxyl groups in a β-1,3-glucan unit with the acyl group. Therefore, in theory, an upper limit of the degree of substitution of the acyl group in the β-1,3-glucan derivative is 3.0. The degree of substitution of the acyl group in the β-1,3-glucan derivative is, for example, 1.5 or more, preferably 2.0 or more, and 3.0 or less, preferably below 3.0, more preferably 2.9 or less. When the degree of substitution of the acyl group in the β-1,3-glucan derivative is the above-described lower limit or more or the above-described upper limit or less, formability of the film by thermal pressing is excellent.

A kind, properties and, a production method of the β-1,3-glucan derivative are described in, for example, Japanese Unexamined Patent Publication No. 2018-154723. The degree of substitution of the acyl group in the β-1,3-glucan derivative is determined by ¹H-NMR. Measurement by the ¹H-NMR is described in, for example, Japanese Unexamined Patent Publication No. 2015-124183.

### <Resin>

The resin is a component which ensures shape retainability of the film and improves the mechanical strength of the film. The resin is at least one selected from the group consisting of a rosin-based resin, a terpene-based resin, and a petroleum-based resin. Each classification of the rosin-based resin, the terpene-based resin, and the petroleum-based resin may be also partially overlapped without being distinguished from each other. Specifically, the resin includes a resin which is classified as the terpene-based resin, while being classified as the rosin-based resin. Further, the resin includes a resin which is classified as the petroleum-based resin, while being classified as the rosin-based resin. Furthermore, the resin includes a resin which is classified as the petroleum-based resin, while being classified as the terpene-based resin.

### <Rosin-Based Resin>

Examples of the rosin-based resin include disproportionated rosin, rosin esters, phenol-modified rosin, hydrogenated rosin, polymerized rosin, maleated rosin, fumarated rosin, disproportionated maleic acid-modified rosin resins, and rosin metal salts. The rosin ester includes a pentaerythritol ester-modified rosin resin. The phenol-modified rosin may be referred to as a terpene phenol resin. These may be used alone or in combination of two or more. As the rosin-based resin, preferably, from the viewpoint of improving the mechanical strength, a rosin ester and a rosin metal salt are used.

A softening point of the rosin-based resin is not limited. Specifically, the softening point by a ring and ball method of the rosin-based resin is, for example, 110°C or more and for example, 170°C or less.

### <Terpene-Based Resin>

Examples of the terpene-based resin include terpene resins, hydrides of terpene resins, aromatic modified terpene resins, phenol-modified terpene resins, and hydrides of phenol-modified terpene resins. These may be used alone or in combination of two or more. As the terpene-based resin, preferably, a phenol-modified terpene resin and a terpene resin are used, more preferably, from the viewpoint of increasing the tensile elastic modulus and the maximum stress of the film, a phenol-modified terpene resin is used. The phenol-modified terpene resin may be also referred to as a terpene phenol resin.

The softening point of the terpene-based resin is not limited. Specifically, the softening point by the ring and ball method of the terpene-based resin is, for example, 15°C or more, preferably 60°C or more, more preferably 100°C or more, and for example, 170°C or less, preferably 140°C or less. When the softening point by the ring and ball method of the terpene-based resin is the above-described lower limit or more, it is possible to increase the tensile elastic modulus and the maximum stress of the film.

### <Petroleum-Based Resin>

Examples of the petroleum-based resin include aliphatic (C5) petroleum resins, aromatic (C9) petroleum resins, aliphatic/aromatic copolymerization (C5/C9) petroleum resins, hydrogenated products of these, modified products of these (for example, maleic anhydride modified product), coumarone resins, coumarone indene resins, and styrene-based tackifiers. These may be used alone or in combination of two or more. As the petroleum-based resin, preferably, from the viewpoint of improving the mechanical strength, a hydrogenated product is used, more preferably, a hydrogenated product of an aromatic (C9) petroleum resin is used.

A hydrogenation ratio in the hydrogenated product is not limited. The hydrogenation ratio is, for example, 50% or more, preferably, from the viewpoint of improving the mechanical strength, 80% or more, and for example, 100% or less.

The softening point of the resin is not limited. The softening point by the ring and ball method of the resin is, for example, 25°C or more, and for example, 170°C or less.

The rosin-based resin, the terpene-based resin, and the petroleum-based resin are identified by the ¹H-NMR spectrum, FT-IR spectrum, gel permeation chromatography, and/or mass spectrometry.

### <Mixing Ratio of Resin>

Parts by weight of the resin with respect to 100 parts by weight of the β-1,3 -glucan derivative are 90 parts by weight or less. When the parts by weight of the resin with respect to 100 parts by weight of the β-1,3-glucan derivative are above 90 parts by weight, it is impossible to ensure the shape retainability of the film, and the tensile elastic modulus and the maximum tensile stress are reduced. In other words, the mechanical strength of the film is insufficient.

The parts by weight of the resin with respect to 100 parts by weight of the β-1,3-glucan derivative are, for example, 5 parts by weight or more, preferably, from the viewpoint of sufficiently improving the mechanical strength of the film, 10 parts by weight or more, more preferably 20 parts by weight or more, further more preferably 30 parts by weight or more, particularly preferably, from the viewpoint of further increasing the maximum tensile stress, 50 parts by weight or more. In addition, the parts by weight of the resin with respect to 100 parts by weight of the β-1,3-glucan derivative are preferably 80 parts by weight or less, more preferably 70 parts by weight or less, further more preferably, from the viewpoint of further increasing the tensile elastic modulus, 60 parts by weight or less.

### <Additive>

The resin may contain an additive at an appropriate ratio as long as it does not inhibit the effect of the present invention. Examples of the additive include other base polymers, other resins, leveling agents, plasticizers, fillers, stabilizers, preservatives, and antioxidants.

### <Properties of Film>

A thickness of the film is not limited. The thickness of the film is, for example, 0.1 µm or more, preferably 1 µm or more, and for example, 1000 µm or less, preferably 250 µm or less.

The film has, for example, no tackiness (pressure-sensitive adhesiveness), and has high toughness.

Specifically, the tensile elastic modulus (Young's modulus) at 23°C of the film is, for example, 100 MPa or more, preferably 150 MPa or more, more preferably 200 MPa or more, further more preferably 300 MPa or more, still more preferably 400 MPa or more, 450 MPa or more, 500 MPa or more, 600 MPa or more, 625 MPa or more, 700 MPa or more. When the tensile elastic modulus of the film is the above-described lower limit or more, the film has no tackiness (pressure-sensitive adhesiveness), and has the excellent shape retainability and the excellent mechanical strength. The upper limit of the tensile elastic modulus at 23°C of the film is not limited. Specifically, the tensile elastic modulus at 23°C of the film is, for example, 10,000 MPa or less, preferably 1,000 MPa or less. When the tensile elastic modulus of the film is the above-described upper limit or less, it has the excellent toughness.

The maximum tensile stress at 23°C of the film is, for example, 5 MPa or more, preferably 12.5 MPa or more, more preferably 15 MPa or more, further more preferably 17.5 MPa or more, still more preferably 19 MPa or more. 20 MPa or more, 22 MPa or more, 25 MPa or more. When the maximum tensile stress of the film is the above-described lower limit or more, the film has the excellent mechanical strength. The upper limit of the maximum tensile stress of the film is not limited. Specifically, the maximum tensile stress at 23°C of the film is, for example, 1,000 MPa or less.

A method for measuring the tensile elastic modulus and the maximum tensile stress is described in Examples later.

To produce the film, first, the β-1,3-glucan derivative, the resin, and if necessary, an additive are blended and mixed, thereby preparing a film composition. The film composition contains the β-1,3-glucan derivative, the resin, and if necessary, the additive. It is also possible to prepare a solution containing the film composition by dissolving each of the components described above in a solvent. The kind of the solvent is not limited. A ratio of the solid content in the solution of the film composition is, for example, 1% by weight or more, preferably 3% by weight or more, and for example, below 50% by weight, preferably 30% by weight or less.

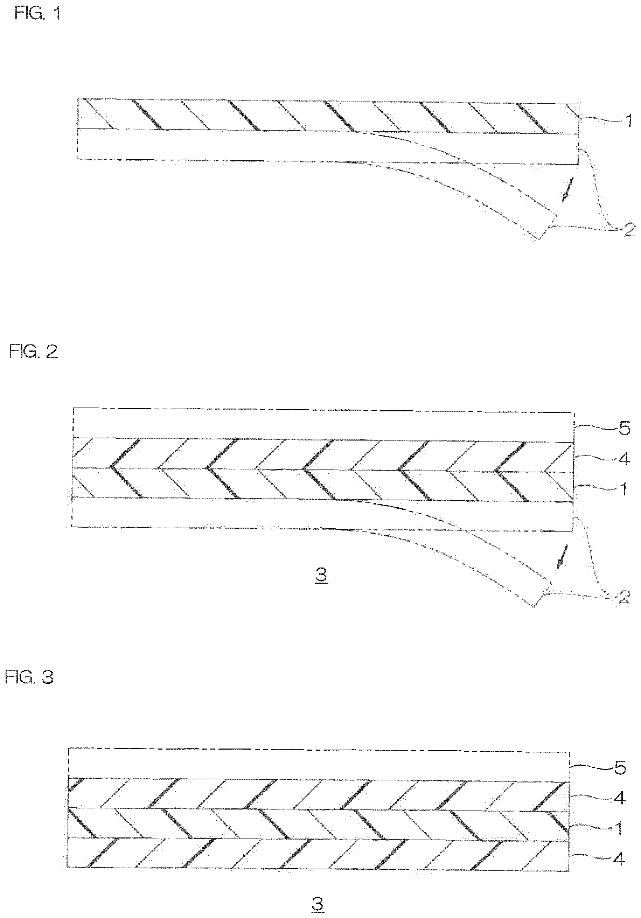

As shown in FIG. 1, the solution of the film composition is coated onto the surface of a release sheet 2 shown by a virtual line. Thereafter, the solution is dried, thereby forming a film 1. The heating is carried out, if necessary, during drying. The drying conditions are not limited as long as the solvent contained in the solution is removed. The surface of the release sheet 2 may be also subjected to a release treatment.

Thus, the film 1 laminated in the release sheet 2 is obtained.

Thereafter, the release sheet 2 is peeled from the film 1 as shown by an arrow of FIG. 1.

Next, a pressure-sensitive adhesive tape 3 including the above-described film 1 is described with reference to FIG. 2.

The pressure-sensitive adhesive tape 3 includes the film 1 and a pressure-sensitive adhesive layer 4 in order toward one side in a thickness direction.

The film 1 is a substrate film in the pressure-sensitive adhesive tape 3.

The pressure-sensitive adhesive layer 4 is disposed on one surface in the thickness direction of the film 1. The pressure-sensitive adhesive layer 4 is made of a pressure-sensitive adhesive composition. The pressure-sensitive adhesive composition is not limited. The thickness of the pressure-sensitive adhesive layer 4 is not limited.

The thickness of the pressure-sensitive adhesive tape 3 is, for example, 1 µm or more, and for example, 1100 µm or less.

### <Effect of Film and Pressure-Sensitive Adhesive Tape>

The above-described film 1 has the excellent mechanical strength.

Since the pressure-sensitive adhesive tape 3 includes the above-described film 1, it has the excellent mechanical strength.

### <Modified Examples of Pressure-Sensitive Adhesive Tape>

In each modified example, the same reference numerals are provided for members and steps corresponding to each of those in one embodiment, and their detailed description is omitted. Further, each modified example can achieve the same function and effect as that of one embodiment unless otherwise specified. Furthermore, one embodiment and each modified example can be appropriately used in combination.

As shown by the phantom line of FIG. 2, the pressure-sensitive adhesive tape 3 may also further include a second release sheet 5. The second release sheet 5 is disposed on one surface in the thickness direction of the pressure-sensitive adhesive layer 4.

Further, as shown in FIG. 3, the pressure-sensitive adhesive tape 3 may also include the film 1, and the pressure-sensitive adhesive layers 4 disposed on each of the front surface and the back surface thereof. In the pressure-sensitive adhesive tape 3 of FIG. 3, the pressure-sensitive adhesive layer 4, the film 1, and the pressure-sensitive adhesive layer 4 are disposed in order toward one side in the thickness direction.

### Examples

Next, the present invention is further described based on Synthesis Examples, Examples, and Comparative Examples. The present invention is however not limited by these Synthesis Examples, Examples, and Comparative Examples. The specific numerical values in mixing ratio (content ratio), property value, and parameter used in the following description can be replaced with upper limit values (numerical values defined as "or less" or "below") or lower limit values (numerical values defined as "or more" or "above") of corresponding numerical values in mixing ratio (content ratio), property value, and parameter described in the above-described "DESCRIPTION OF EMBODIMENTS". Further, all designations of "part" or "parts" and "%" mean part or parts by weight and % by weight, respectively, unless otherwise particularly specified in the following description.

### <Synthesis of β-1,3-glucan Derivative>

### <Synthesis Example 1>

### <Synthesis of Butyrylated β-1,3-glucan (Number of Carbon Atoms of R in RCO of 3 and Degree of Substitution of Acyl Group of 2.8)>

A reaction vessel equipped with a cooling tube, a nitrogen introduction tube, a thermometer, and a stirrer was charged with 6 g of β-1,3-glucan (manufactured by Euglena Co., Ltd., glucose portion of 37.0 mmol) and 500 mL of dehydrated pyridine (manufactured by FUJIFILM Wako Pure Chemical Corporation), and the obtained mixture was stirred for 0.5 hours under a nitrogen atmosphere at a temperature of 92°C. A butyryl chloride (19.7 mL) (185.0 mmol, manufactured by FUJIFILM Wako Pure Chemical Corporation) was added to a pyridine solution, and then, the obtained mixture was heated at 60°C to be stirred for 1 hour. Thus, a reaction liquid mixture was prepared.

Thereafter, an intermediate of a solid matter was obtained from the reaction liquid mixture. First, 800 mL of water was added to the reaction liquid mixture after one hour of the start of the reaction, the resulting liquid was cooled to a room temperature, and the solid matter was precipitated. Next, the resulting solid matter was taken out, and the taken solid matter was dissolved in 500 mL of ethyl acetate, thereby preparing an ethyl acetate solution. The toluene solution was poured into 1000 mL of methanol during stirring, and further, 1000 mL of water was poured thereto, thereby obtaining the solid matter. An operation in which the solid matter was dissolved in the ethyl acetate to be poured into the methanol, and the water was added to the resulting liquid was repeated twice. As a result, the resulting liquid was cleansed, thereby obtaining a solid matter (reprecipitation). The solid matter was dried under a reduced pressure at 60°C for 4 hours. Thus, a butyrylated β-1,3-glucan was obtained. In other words, the butyrylated β-1,3-glucan was the β-1,3-glucan derivative obtained by introducing a butyryl into the β-1,3-glucan.

In addition, the degree of substitution of the butyryl in the butyrylated β-1,3-glucan was determined by the ¹H-NMR. In the ¹H-NMR, signals of hydrogen atoms forming hydroxyl groups in glucose units and signals of hydrogen atoms forming the butyryl (C₃H₇CO) were distinguished, and detected. The degree of substitution of the butyryl (acyl group) was determined based on integrated values of each of the two signals. As a result, the degree of substitution (DS) was 2.8. The degree of substitution (DS) of the acyl group in the β-1,3-glucan derivative in the following Synthesis Examples was also determined in the same manner as the description above.

### <Synthesis Example 2>

### <Synthesis of Propionylated β-1,3-glucan (Number of Carbon Atoms of R in RCO of 2 and Degree of Substitution of Acyl Group of 2.8)>

A propionylated β-1,3-glucan was obtained in the same manner as in Synthesis Example 1. However, 16.17 mL of propionyl chloride (185.0 mmol, manufactured by FUJIFILM Wako Pure Chemical Corporation) was blended instead of 19.7 mL of butyryl chloride (185.0 mmol, manufactured by FUJIFILM Wako Pure Chemical Corporation).

### <Comparative Synthesis Example 1>

### <Synthesis of Octanoylated β-1,3-glucan (Number of Carbon Atoms of R in RCO of 7 and Degree of Substitution of Acyl Group of 2.8)>

An octanoylated β-1,3-glucan was obtained in the same manner as in Synthesis Example 1. However, 19.7 mL of butyryl chloride (185.0 mmol, manufactured by FUJIFILM Wako Pure Chemical Corporation) was changed to 31.58 mL of octanoyl chloride (185.0 mmol, manufactured by FUJIFILM Wako Pure Chemical Corporation). At the time of reprecipitation, the solid matter was dissolved in 300 mL of toluene, and the dissolved product was poured into 1000 mL of methanol.

### <Production of Film>

### <Example 1>

The acylated P-1,3-glucan (dried product) of Synthesis Example 1 was dissolved in toluene, thereby preparing a toluene solution of the acylated β-1,3-glucan having the solid content concentration of 5% by weight.

Separately, PENSEL D-125 (manufactured by Arakawa Chemical Industries, Ltd., rosin ester, softening point of 120 to 130°C by the ring and ball method) as a rosin-based resin was dissolved in the toluene, thereby preparing a toluene solution of the rosin-based resin having the solid content concentration of 50% by weight.

Thereafter, the toluene solution of the acylated β-1,3-glucan and the above-described toluene solution of the resin were blended and mixed. The parts by weight of the resin with respect to 100 parts by weight of the acylated β-1,3-glucan were set at 30 parts by weight. Thus, a solution of the film composition was prepared.

The solution of the film composition was coated onto the surface (release treatment surface) of the release sheet 2 made of DIAFOIL MRF25 (polyethylene terephthalate, thickness of 25 µm, manufactured by Mitsubishi Chemical Corporation) using an applicator (manufactured by TESTER SANGYO CO., LTD.). Subsequently, the coated sheet was dried by heating at 60°C for 5 minutes and further, at 100°C for 5 minutes. Thus, the film 1 having a thickness of 50 µm was produced in a state of being in contact with the release sheet 2.

### <Examples 2 to 11 and Comparative Examples 1 to 3>

Each of the films 1 of Examples 2 to 11 and Comparative Examples 1 to 3 was produced in the same manner as in Example 1. Each change from Example 1 was described below. The details may be referred to Tables 1 to 3.

### <Example 2>

The parts by weight of the resin with respect to 100 parts by weight of the acylated β-1,3-glucan were changed from 30 parts by weight to 50 parts by weight.

### <Example 3>

The parts by weight of the resin with respect to 100 parts by weight of the acylated β-1,3-glucan were changed from 30 parts by weight to 70 parts by weight.

### <Comparative Example 1>

No resin was blended.

### <Comparative Example 2>

The parts by weight of the resin with respect to 100 parts by weight of the acylated β-1,3-glucan were changed from 30 parts by weight to 100 parts by weight.

### <Example 4>

PENSEL D-160 (manufactured by Arakawa Chemical Industries, Ltd., rosin ester, softening point of 150 to 165°C by the ring and ball method) as a rosin-based resin was used instead of PENSEL D-125 (manufactured by Arakawa Chemical Industries, Ltd., rosin ester, softening point of 120 to 130°C by the ring and ball method) as a rosin-based resin.

### <Example 5>

TAMANOL 901 (manufactured by Arakawa Chemical Industries, Ltd., phenol-modified rosin, softening point of 125 to 135°C by the ring and ball method) as a rosin-based resin was used instead of PENSEL D-125 (manufactured by Arakawa Chemical Industries, Ltd., rosin ester, softening point of 120 to 130°C by the ring and ball method) as a rosin-based resin.

### <Example 6>

PINECRYSTAL KR-50M (manufactured by Arakawa Chemical Industries, Ltd., rosin metal salt, softening point of 145 to 160°C by the ring and ball method) as a rosin-based resin was used instead of PENSEL D-125 (manufactured by Arakawa Chemical Industries, Ltd., rosin ester, softening point of 120 to 130°C by the ring and ball method) as a rosin-based resin.

### <Example 7>

YS POLYSTER T-30 (manufactured by YASUHARA CHEMICAL CO., LTD., phenol-modified terpene resin, softening point of 25 to 35°C by the ring the and ball method) as a terpene-based resin was used instead of PENSEL D-125 (manufactured by Arakawa Chemical Industries, Ltd., rosin ester, softening point of 120 to 130°C by the ring and ball method) as a rosin-based resin.

### <Example 8>

YS POLYSTER T-130 (manufactured by YASUHARA CHEMICAL CO., LTD., phenol-modified terpene resin, softening point of 125 to 135°C by the ring and ball method) as a terpene-based resin was used instead of PENSEL D-125 (manufactured by Arakawa Chemical Industries, Ltd., rosin ester, softening point of 120 to 130°C by the ring and ball method) as a rosin-based resin.

### <Example 9>

YS RESIN PX-1250 (manufactured by YASUHARA CHEMICAL CO., LTD., terpene resin, softening point of 120 to 130°C by the ring and ball method) as a terpene-based resin was used instead of PENSEL D-125 (manufactured by Arakawa Chemical Industries, Ltd., rosin ester, softening point of 120 to 130°C by the ring and ball method) as a rosin-based resin.

### <Example 10>

ARKON P-125 (manufactured by Arakawa Chemical Industries, Ltd., hydrogenated product of aromatic (C9) petroleum resin, hydrogenation ratio of 90 to 100%) as a petroleum-based resin was used instead of PENSEL D-125 (manufactured by Arakawa Chemical Industries, Ltd., rosin ester, softening point of 120 to 130°C by the ring and ball method) as a rosin-based resin.

### <Example 11>

The propionylated β-1,3-glucan of Synthesis Example 2 was used instead of the butyrylated β-1,3-glucan of Synthesis Example 1. In other words, in Example 11, the acyl group in the β-1,3-glucan derivative was changed from the butyryl to a propionyl (R in RCO of 2).

### <Comparative Example 3>

The octanoylated β-1,3-glucan of Comparative Synthesis Example 1 was used instead of the butyrylated β-1,3-glucan of Synthesis Example 1. In other words, in Comparative Example 3, the acyl group in the β-1,3-glucan derivative was changed from the butyryl to an octanoyl (R in RCO of 7).

### <Evaluation>

The following items were evaluated for each of the films 1 of Examples 1 to 11 and Comparative Examples 1 to 3. The results of these are shown in Tables 1 to 3. Example 1 was described in both Table 2 and Table 3 for easy comparison with other Examples.

### <Measurement of Mechanical Strength>

The film 1 was cut into a width of 10 mm and a length of 50 mm, and after the cutting, the release sheet 2 was peeled from the film 1. Thus, a sample was fabricated.

The tensile elastic modulus at 23°C of the sample and the maximum tensile stress at 23°C of the sample were determined by a tensile test using a universal testing machine. As the universal testing machine, Autograph AG-X/R (manufactured by SHIMADZU CORPORATION) was used. A tensile rate was 300 mm/min. A distance between chucks in the samples was 20 mm. The test environment was a temperature of 23°C and relative humidity of 50%. In the above-described tensile test, a S-S (stress-strain) test was carried out, thereby obtaining a S-S (stress-strain) line.

### <Tensile Elastic Modulus>

An initial tensile elastic modulus was determined as a tensile elastic modulus from the obtained S-S (stress-strain) line.

### <Maximum Tensile Stress>

The maximum stress until fracture in the S-S (stress-strain) line was determined as the maximum tensile stress.

### [Table 1]

**Table 1**

| | | Comparative Ex. 1 | Ex. 1 | Ex. 2 | Ex. 3 | Comparative Ex. 2 |
|---|---|---|---|---|---|---|
| β-1,3-glucan Derivative | Synthesis Ex. Comparative Synthesis Ex. | Synthesis Ex. 1 | Synthesis Ex. 1 | Synthesis Ex. 1 | Synthesis Ex. 1 | Synthesis Ex. 1 |
| | Number of Carbon Atoms of R in RCO | 3 | 3 | 3 | 3 | 3 |
| Resin | Kind | - | Rosin-Based Resin | Rosin-Based Resin | Rosin-Based Resin | Rosin-Based Resin |
| | Product Name | - | PENSEL D-125 | PENSEL D-125 | PENSEL . D-125 | PENSEL D-125 |
| | Parts by Weight to 100 Parts by Weight of β-1,3-glucan Derivative | - | 30 | 50 | 70 | 100 |
| Evaluation of Mechanical Strength | Tensile Elastic Modulus (MPa) | 222 | 726 | 641 | 536 | 9.2 |
| | Maximum Tensile Stress (MPa) | 14.2 | 21.9 | 21.5 | 26.2 | 0.2 |

### [Table 2]

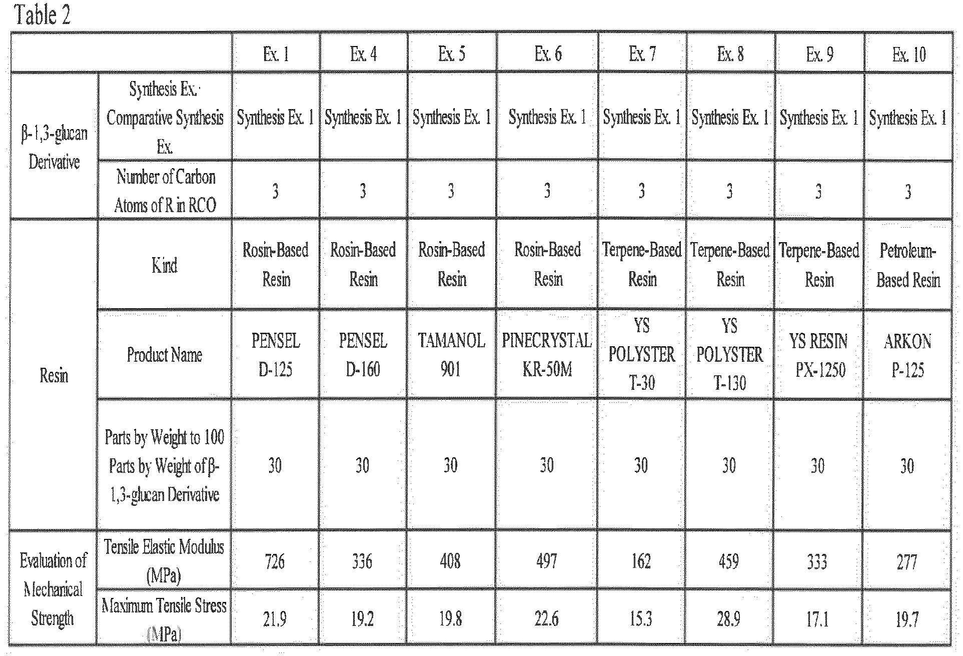

### [Table 3]

**Table 3**

| | | Ex. 11 | Ex. 1 | Comparative Ex. 3 |
|---|---|---|---|---|
| P-1,3-glucan Derivative | Synthesis Ex. Comparative Synthesis Ex. | Synthesis Ex. 2 | Synthesis Ex. 1 | Comparative Synthesis Ex. 1 |
| | Number of Carbon Atoms of R in RCO | 2 | 3 | 7 |
| Resin | Kind | Rosin-Based Resin | Rosin-Based Resin | Rosin-Based Resin |
| | Product Name | PENSEL D-125 | PENSEL D-125 | PENSEL D-125 |
| | Parts by Weight to 100 Parts by Weight of β-1,3-glucan Derivative | 30 | 30 | 30 |
| Evaluation of Mechanical Strength | Tensile Elastic Modulus (MPa) | 606 | 726 | 0.5 |
| | Maximum Tensile Stress (MPa) | 39.3 | 21.9 | 1.4 |

While the illustrative embodiments of the present invention are provided in the above description, such is for illustrative purpose only and it is not to be construed as limiting the scope of the present invention. Modification and variation of the present invention that will be obvious to those skilled in the art is to be covered by the following claims.

### INDUSTRIAL APPLICATION

The film of the present invention, together with a pressure-sensitive adhesive layer, is provided in a pressure-sensitive adhesive tape.

### Description of Reference Numerals

- 1: Film
- 3: Pressure-sensitive adhesive tape
- 4: Pressure-sensitive adhesive layer

## Claims

1. A film comprising:
a β-1,3-glucan derivative obtained by introducing an acyl group into a β-1,3-glucan; and
at least one resin selected from the group consisting of a rosin-based resin, a terpene-based resin, and a petroleum-based resin, wherein
the acyl group is represented by RCO-, and the R is a hydrocarbon group having 1 or more and 5 or less carbon atoms, and
parts by weight of the resin with respect to 100 parts by weight of the β-1,3-glucan derivative are 90 parts by weight or less.

2. A pressure-sensitive adhesive tape comprising:
the film according to claim 1; and
a pressure-sensitive adhesive layer disposed on one surface in a thickness direction of the film.
